# EUROPEAN PATENT APPLICATION

(11) **EP 3 437 721 A1**
(43) Date of publication of application: **06.02.2019**
(21) Application number: 18186496.8
(22) Date of filing: 31.07.2018
(51) Int. Cl.: B01D 61/08, C02F 1/00, C02F 9/00

(54) **HOUSING ASSEMBLY AND WATER PURIFIER**

(30) Priority: 01.08.2017 CN 201710648446; 01.08.2017 CN 201710648439; 01.08.2017 CN 201710647822
(71) Applicant: Foshan Shunde Midea Water Dispenser Mfg. Co., Ltd., Foshan, Guangdong 528311 (CN)
(72) Inventor: ZHANG, Xingzhi, Foshan, Guangdong 528311 (CN); WU, Weiping, Foshan, Guangdong 528311 (CN)
(74) Representative: Lam, Alvin

(57) **Abstract**

The present disclosure provides a housing assembly and a water purifier applying the housing assembly. The housing assembly includes a housing assembly configured to receive a composite filter element (20) of the water purifier, the housing assembly includes a housing (30), a pressing cover (10) for covering or opening the housing, and a connecting element defined on the housing, the composite filter element is received in the housing and connected with the housing, and the top end of the composite filter element passes through the pressing cover, one end of the pressing cover is connected with the housing via the connecting element, and the pressing cover rotates relative to the housing around the connecting element, to cover or open the housing.

## Description

### TECHNICAL FIELD

The present disclosure relates to the technology field of water purifier, and more particularly to a housing assembly and a water purifier having the housing assembly.

### BACKGROUND

Water purifier is a kind of purifying device for removing solid particles, bacterial viruses, and hazardous chemicals contained in water. Water processed by the water purifier can achieve a certain cleanliness. The existed water purifier in the market normally has a housing and a pressing cover, which are used for protecting and fixing a filter element. However, the housing and pressing cover of the existed water purifier are commonly split structures, thus when the filter element needs to be changed, the pressing cover should be opened and placed at a certain place, which is inconvenient.

### SUMMARY

The present disclosure is to provide a housing assembly and a water purifier having the housing assembly, which aims to solve the problem of that the operation of the water purifier is inconvenient due to a split design of the housing and the pressing cover.

In order to achieve the above aim, the present disclosure provides a housing assembly for receiving a composite filter element of a water purifier, the housing assembly includes a housing, a pressing cover for covering or opening the housing, and a connecting element defined on the housing. the composite filter element is received in the housing and connected with the housing, and the top end of the composite filter element passes through the pressing cover, one end of the pressing cover is connected with the housing via the connecting element, and the pressing cover rotates relative to the housing around the connecting element, to cover or open the housing.

In some embodiment, the pressing cover includes a pressing cover body, the pressing cover body includes a first pressing cover and a second pressing cover, the first pressing cover is connected on the top of the housing, the second pressing cover is connected with a side of the first pressing cover opposite to the housing, the first pressing cover defines a first through hole, the second pressing cover defines a second through hole communicated with the first through hole, the top end of the composite filter element passes through the first through hole and the second through hole.

In some embodiment, the first pressing cover includes a first connecting arm, a second connecting arm, and a third connecting arm, the first connecting arm, the second connecting arm, and the third connecting arm are connected with each other in sequence to form the first through hole and/or, the top of the housing defines an opening for taking out of the filter element from the housing or placing the filter element into the housing, the first pressing cover and the second pressing cover are both rotatably connected with a part of the housing adjacent to the opening, the first through hole and the second through hole are both communicated with the opening, the top end of the composite filter element passes through the opening, the first through hole, and the second through hole.

In some embodiment, the pressing cover includes a spring, a clamping shaft and a handle, the spring, the clamping shaft, and the handle are all defined on the side of the first pressing cover opposite to the housing, one end of the spring is connected with the first pressing cover, the other end of the spring is connected with the clamping shaft, a side of the clamping shaft opposite to the spring is connected with the handle, the handle is enable to rotate relative to the pressing cover body, to push the clamping shaft to press the spring and make the clamping shaft escape from the housing, for the pressing cover to open the housing.

In some embodiment, the first pressing cover defines a mounting groove and a receiving groove, the receiving groove is run through with the mounting groove, the mounting groove is for receiving the clamping shaft, the receiving groove is for receiving the spring.

In some embodiment, the bottom of the mounting groove defines a guide rail, the clamping shaft defines a guide groove corresponded to the guide rail; or,

the bottom of the mounting groove defines a guide groove, the clamping shaft defines a guide rail corresponded to the guide groove.

In some embodiment, the handle includes a handle body, a connecting shaft, a clamping strip, and a holding part, the connecting shaft is defined on two opposite sides of the handle body and connected with the first pressing cover, the handle body is enable to rotate around the connecting shaft, the clamping strip is defined at a side of the handle body facing the clamping shaft, and the clamping strip extends towards the housing, the holding part is defined on a side of the handle body opposite to the clamping shaft; one end of the clamping shaft back to the guide groove defines a clamping groove for receiving the clamping strip.

In some embodiment, the top of the housing protrudes a positioning part for clamping with the clamping shaft, the first pressing cover resists on the positioning part.

In some embodiment, the positioning part defines a via hole, the clamping shaft defines a clamping part which is received in the via hole.

In some embodiment, the top of the clamping shaft defines a positioning post, a wall of the via hole defines a positioning element for clamping with the positioning post.

In some embodiment, the housing defines a fixing element for fixing the connecting element, the fixing element defines a connecting hole, the second pressing cover includes a first side wall and a second side wall facing the first side wall, the first side wall is connected with the first connecting arm, the second side wall is connected with the third connecting arm, one end of the first side wall and one end of the second side wall both define a third through hole for receiving the connecting element, the connecting element passes through the connecting hole and the third through holes in sequence, to connect with the fixing element and the second pressing cover.

In some embodiment, the connecting element includes a first connecting segment and a second connecting segment connected with the first connecting segment, the first connecting segment defines an external thread, the connecting hole defines an internal thread matching to the external thread, the aperture of the connecting hole is larger than the aperture of the third through hole.

In some embodiment, the connecting element further defines a limiting element, the limiting element is defined on an end of the first connecting segment opposite to the second connecting segment, and the orthographic projection area of the limiting element projected on the fixing element is larger than the area of the opening of the connecting hole.

In order to achieve the object, the present disclosure further provides a water purifier, which includes a composite filter element and the above housing assembly.

In some embodiment, the composite filter element includes a filter element body, the filter element body is received in the housing and connected with the housing, the filter element body includes a bottle body, and a membrane component located in the bottle body, the membrane component includes a pre-filtering filter element, a fine filtering filter element, and an activated carbon filter element which are located along a flow direction of water in sequence.

The pressing cover of the present disclosure is connected with the housing via the connecting element, the pressing cover can be integrated with the housing, and the pressing cover can rotate around the connecting element, as such the pressing cover can open or cover the housing through rotating. Such that the pressing cover can be always connected with the housing, it does not need to place the pressing cover to other place, which is convenient.

### BRIEF DESCRIPTION OF THE DRAWINGS

To illustrate the exemplary embodiments of the present disclosure or the technical proposal of the prior art more clearly, the accompanying drawings for describing the exemplary embodiments or the prior art are introduced briefly in the following, apparently, the accompanying drawings in the following description are only about some embodiments of the present invention, and persons of ordinary skill in the art can derive other drawings from the steps shown in the accompanying drawings without creative efforts.
FIG. 1 is a structural diagram of the water purifier of the present disclosure according to an exemplary embodiment.
FIG. 2 is a structural diagram of the housing assembly of the water purifier shown in FIG. 1 without mounting the second pressing cover and the handle.
FIG. 3 is an exploded diagram of the pressing cover of the housing assembly of the present disclosure according to an exemplary embodiment.

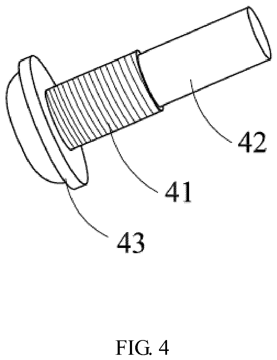

FIG. 4 is a structural diagram of the connecting element shown in FIG. 1.
FIG. 5 is a structural diagram of the composite filter element shown in FIG. 1.

Labels illustration for drawings:

| Label | Name | Label | Name |
|---|---|---|---|
| 10 | pressing cover | 142 | positioning post |
| 11 | pressing cover body | 143 | clamping part |
| 111 | first pressing cover | 144 | containing slot |
| 1111 | first connecting arm | 15 | spring |
| 1112 | second connecting arm | 20 | composite filter element |
| 1113 | third connecting arm | 21 | filter element body |
| 1114 | first through hole | 211 | bottle body |
| 1115 | mounting groove | 22 | water board |
| 1116 | receiving groove | 23 | waterway pipe interface |
| 1117 | guide rail | 24 | sealing ring |
| 112 | second pressing cove | 25 | handle |
| 1121 | first side wall | 26 | collar bore structure |
| 1122 | second side wall | 30 | housing |
| 1123 | third through hole | 31 | fixing element |
| 1124 | second through hole | 32 | positioning part |
| 13 | handle | 33 | via hole |
| 131 | handle body | 34 | separating strip |
| 132 | connecting shaft | 35 | receiving hole |
| 133 | clamping strip | 40 | connecting element |
| 134 | holding part | 41 | first connecting segment |
| 14 | clamping shaft | 42 | second connecting segment |
| 141 | clamping groove | 43 | limiting element |

The realizing of the aim, functional characteristics, advantages of the present disclosure are further described in detail with reference to the accompanying drawings and the embodiments.

### DETAILED DESCRIPTION OF THE EMBODIMENTS

The technical solutions of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present invention without creative efforts shall fall within the protection scope of the present invention.

It is to be understood that, all of the directional instructions in the exemplary embodiments of the present disclosure (such as top, down, left, right, front, back......) can only be used for explaining relative position relations, moving condition of the elements under a special form (referring to figures), and so on, if the special form changes, the directional instructions changes accordingly.

In addition, the descriptions, such as the "first", the "second" in the present disclosure, can only be used for describing the aim of description, and cannot be understood as indicating or suggestting relative importance or impliedly indicating the number of the indicated technical character. Therefore, the character indicated by the "first", the "second" can express or impliedly include at least one character. In addition, the technical proposal of each exemplary embodiment can be combined with each other, however the technical proposal must base on that the ordinary skill in that art can realize the technical proposal, when the combination of the technical proposals occurs contradiction or cannot realize, it should consider that the combination of the technical proposals does not existed, and is not contained in the protection scope required by the present disclosure.

In the present disclosure, unless specified or limited otherwise, the terms "connected", "fixed" and the like are used broadly, and for example, "fixed" can be fixed connections, detachable connections, or integral connections; may also be mechanical or electrical connections; may also be direct connections or indirect connections via intervening structures, may also be inner connecting of two elements, or interaction relationship between two elements, unless specifically limited otherwise. which can be understood by those skilled in the art according to specific situations, which can be understood by those skilled in the art according to the detail embodiment of the present disclosure.

In addition, the technical proposal of each exemplary embodiment can be combined with each other, however the technical proposal must base on that the ordinary skill in that art can realize the technical proposal, when the combination of the technical proposals occurs contradiction or cannot realize, it should consider that the combination of the technical proposals does not existed, and is not contained in the protection scope required by the present disclosure.

The present disclosure provides a housing assembly, which is configured to receive a composite filter element 20 of a water purifier.

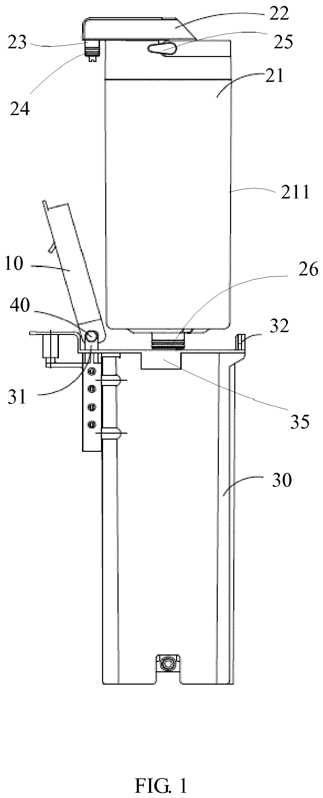

Referring to FIGS. 1-3, in an exemplary embodiment of the housing assembly provided by the present disclosure, the housing assembly of the water purifier includes a housing 30, a pressing cover 10 for covering or opening the housing 30, and a connecting element 40 defined on the housing 10, the composite filter element 20 is received in the housing 30 and connected with the housing 30, and the top end of the composite filter element 20 passes through the pressing cover 10, one end of the pressing cover 10 is connected with the housing 30 via the connecting element 40, and the pressing cover 10 rotates relative to the housing 30 around the connecting element 40, to cover or open the housing 30.

In the technical proposal of the present disclosure, the pressing cover 10 is connected with the housing 30 via the connecting element 40, as such the pressing cover 10 can be integrated with the housing 30, the pressing cover 10 can rotate around the connecting element 40, so that the pressing cover 10 can open or cover the housing 30 through rotating. Therefore the pressing cover 10 can be always connected with the housing 30, it does not need to place the pressing cover 10 to other place, which is convenient.

The pressing cover 10 is defined at the top end of the housing 30, as such the composite filter element 20 can be taken out of the housing 30 or placed into the housing 30 through the top end of the housing 30. And the top end of the composite filter element 20 is protruded from the top surface of the pressing cover 10, that is, the filter element is not absolutely covered by the pressing cover 10, user can check the using condition of the filter element without opening the pressing cover 10, which is convenient.

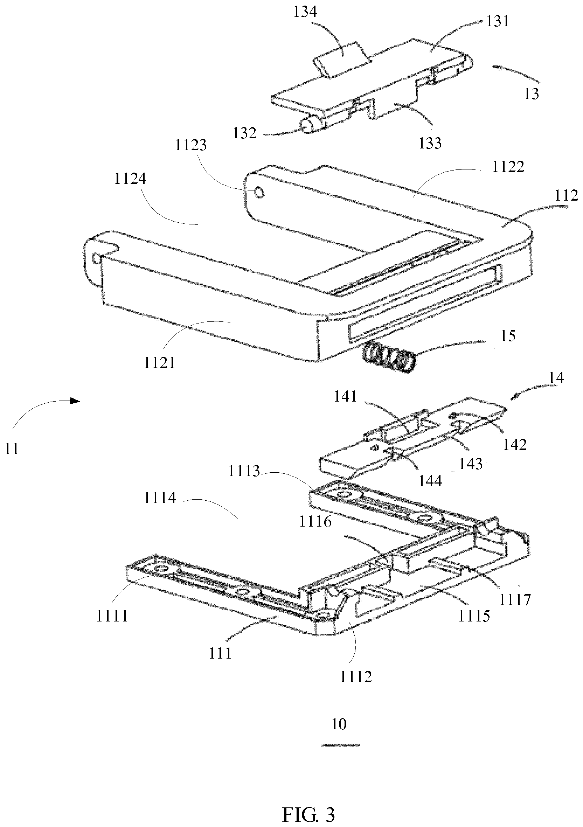

Referring to FIG. 3, the pressing cover 10 includes a pressing cover body 11, the pressing cover body 11 includes a first pressing cover 111 and a second pressing cover 112, the first pressing cover 111 is connected on the top of the housing 30, the second pressing cover 112 is connected with a side of the first pressing cover 111 opposite to the housing 30, the first pressing cover 111 defines a first through hole 1114, the second pressing cover 112 defines a second through hole 1124 communicated with the first through hole 1114, the top end of the composite filter element 20 passes through the first through hole 1114 and the second through hole 1124.

In an exemplary embodiment of the present disclosure, the first pressing cover 111 is clamped with the second pressing cover 112, or connected with the second pressing cover 112 through a screw.

In an exemplary embodiment of the present disclosure, one end of the second pressing cover 112 is connected with the housing 30 via the connecting element 40, and the second pressing cover 112 can rotate relative to the housing 30 around the connecting element 40. As the first pressing cover 111 is connected with the second pressing cover 112, the first pressing cover 1112 and the second pressing cover 112 can cover or open the housing 30 by rotating the first pressing cover 1112 and/or the second pressing cover 112.

And the top end of the composite filter element 20 passes through the first through hole 1114 and the second through hole 1124, as such the top end of the composite filter element 20 can be protruded from the top of the pressing cover 10, user can check the using condition of the filter element without opening the pressing cover 10, which is convenient.

Referring to FIG. 3, the first pressing cover 111 includes a first connecting arm 1111, a second connecting arm 1112, and a third connecting arm 1113, the first connecting arm 1111, the second connecting arm 1112, and the third connecting arm 1113 are connected with each other in sequence to form the first through hole 1114. The top end of the composite filter element 20 passes through the first through hole 1114.

In an exemplary embodiment of the present disclosure, the composite filter element 20 includes a filter element body 21 received in the housing 30, the second connecting arm 1112 can be configured to cover or open the filter element body 21 of the composite filter element 20.

Furthermore, the first connecting arm 1111 is perpendicular to the second connecting arm 1112, the third connecting arm 1113 is perpendicular to the second connecting arm 1112, the first connecting arm 1111 faces the third connecting arm 1113; the aperture of the first through hole 11114 is larger than or equal to the dimension of the top end of the composite filter element 20. That is, the first connecting arm 1111, the second connecting arm 1112, and the third connecting arm 1113 cooperatively form a U-shaped structure, the top end of the composite filter element 20 is protruded from the first through hole 1114, the first connecting arm 1111, the second connecting arm 1112, and the third connecting arm 1113 cooperatively cover the filter element body 21, to limit the filter element body 21.

In the exemplary embodiment, the orthographic projection of the top end of the composite filter element 20 projected on the filter element body 21 is square, and the dimension of the square corresponds to the aperture of the first through hole 1114, the first connecting arm 1111, the second connecting arm 1112, and the third connecting arm 1113, which cooperatively form the first through hole 1114, are used for fixing and limiting the composite filter element 20, further improving the stability of the filter element body 21 received in the housing 30.

Referring to FIGS. 1-3, the top of the housing 30 defines an opening, a filter element of the composite filter element 20 is taken out of the housing 30 or placed into the housing 30 through the opening, the first pressing cover 111 and the second pressing cover 112 are both rotatably connected with a part of the housing 30 adjacent to the opening, the first through hole 1114 and the second through hole 1124 are both communicated with the opening, the top end of the composite filter element 20 passes through the opening, the first through hole 1114 and the second through hole 1124.

The composite filter element 20 further includes a water board 22 and a handle 25, the filter element body 21 is received in the housing 30 and connected with the housing 30, the water board 22 is defined at the top wall of the filter element body 21 and passes through the first through hole 1114 and the second through hole 1124, the handle 25 is defined at the side wall of the filter element body 21.

In the technical solution of the present disclosure, the top of the housing 30 has the opening, the filter element of the composite filter element 20 can be taken out of the housing 30 or placed into the housing 30 through the opening, when it needs to change the filter element, it is convenient to take the composite filter element 20 out of the housing 30, and it is also convenient to place a new composite filter element 20 into the housing 30. The composite filter element 20 includes the filter element body 21 and the water board 22 defined at the top of the filter element body 21, the filter element body 21 is received inside of the housing 30, while the water board 22 passes through the first through hole 1114 and the second through hole 1124 of the pressing cover 10, the area of the filter element body 21 facing the first through hole 1114 and the second through hole 1124 is larger than the area of the opening of the first through hole 1114 and the area of the opening of the second through hole 1124, such that, the filter element body 21 cannot be inserted into the first through hole 1114 and the second through hole 1124, and therefore, the pressing cover 10 having the first through hole 1114 and the second through hole 1124 can press the filter element body 21, and furthermore, the housing 30 and the pressing cover 10 can fix the composite filter element 20 much better. The filter element body 21 defines the handle 25, when the composite filter element 20 needs to be changed, the composite filter element 20 can be quickly taken out of the housing 30 through the opening by the handle 25. In addition, when mounting a new composite filter element 20 into the housing 30, the composite filter element 20 can be connected with the housing 30 through applying force on the handle 25, as such the changing of the composite filter element 20 is convenient.

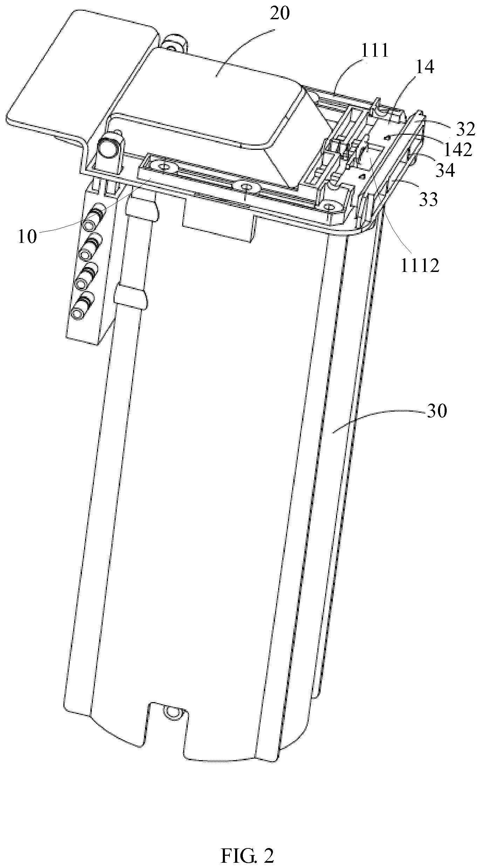

Referring to FIGS. 2-3, the pressing cover 10 includes a spring 15, a clamping shaft 14 and a handle 13, the spring 15, the clamping shaft 14, and the handle 13 are all defined at the side of the first pressing cover 111 opposite to the housing 30, one end of the spring 15 is connected with the first pressing cover 111, the other end of the spring 15 is connected with the clamping shaft 14, a side of the clamping shaft 14 opposite to the spring 15 is connected with the handle 13, the handle 13 is enable to rotate relative to the pressing cover body 11, to pushing the clamping shaft 14 to press the spring 15 and make the clamping shaft 14 escape from the housing 30 , for the pressing cover 10 to open the housing 30.

In the housing assembly of the water purifier provided by the present disclosure, the housing 30 is for receiving a filter element, and the top end of the housing 30 defines the pressing cover 10, the pressing cover 10 can cover the housing 30 to fix the filter element into the housing 30, the pressing cover 10 can be for fixing the filter element. When the pressing cover 10 needs to be open for changing the filter element, the handle 13 on the pressing cover 11 can be rotated, as the handle 13 is connected with the clamping shaft 14, the rotating of the handle 13 can produce a thrust on the clamping shaft 14, and then push the clamping shaft 14 to move and escape from the housing 30, to release the pressing cover 10, so that user does not need to use a tool to open the pressing cover 10, it is convenient for user to operate. When it needs to close the pressing cover 10, the pressing cover 10 can be moved until the clamping shaft 14 clamps with the housing 30, and the pressing cover 10 is fixed with the housing 30, and the filter element can also be fixed, for preventing the filter element from shaking in the housing 30.

Referring to FIGS. 2-3, the first pressing cover 111 defines a receiving groove 1115 and a mounting groove 11156, the receiving groove 1116 is run through with the mounting groove 1115, the mounting groove 1115 is for receiving the clamping shaft 14, the receiving groove 1116 is for receiving the spring 15.

In an exemplary embodiment, the receiving groove 1116 and the mounting groove 1115 are all defined on the second connecting element 1112, the receiving groove 1116 is communicated with the mounting groove 1115, such that one end of the spring 15 which is received in the receiving groove 1116 can resist on the clamping shaft 14 defined inside of the mounting groove 1115. The shape of the second pressing cover 112 is similar to the shape of the first pressing cover 111, as such the second pressing cover 112 can cover the first pressing cover 111.

In an exemplary embodiment, the mounting groove 1115 includes the bottom and three groove walls, and one groove wall define a notch which is connected with the receiving groove 1116.

In an exemplary embodiment of the present disclosure, the bottom of the mounting groove 1115 defines a guide rail 1117, the clamping shaft 14 defines a guide groove corresponded to the guide rail 1117.

A number of the guide rail 1117 can be two, two guide rails 1117 are parallel to each other, and defined at the bottom of the mounting groove 1115, and the guide rail 1117 is perpendicular to the groove wall which is connected with the receiving groove 1116, such that the clamping shaft 14 can move on the guide rail 1117, and it is ensured that the clamping shaft 14 can move towards or away from the receiving groove 1116, as such the clamping shaft 14 can be escaped from the housing 30, or clamped with the housing 30.

In another exemplary embodiment of the present disclosure, the bottom of the mounting groove 1115 defines a guide groove, the clamping shaft 14 defines a guide rail corresponded to the guide groove.

Referring to FIGS. 2-3, the handle 13 includes a handle body 131, a connecting shaft 132, a clamping strip 133, and a holding part 134, the connecting shaft 132 is defined at two opposite sides of the handle body 131 and connected with the first pressing cover 111, the handle body 131 is enable to rotate around the connecting shaft 132, the clamping strip 133 is defined at a side of the handle body 131 facing the clamping shaft 14, and the clamping strip 133 extends towards the housing 30, the holding part 134 is defined at a side of the handle body 131 opposite to the clamping shaft 14; one end of the clamping shaft 14 back to the guide groove defines a clamping groove 141 for receiving the clamping strip 133.

In an exemplary embodiment, a number of the connecting shaft 132 is two, two connecting shafts 132 are defined at the two opposite sides of the handle body 131, respectively, the first pressing cover 111 defines two connecting grooves for receiving the connecting shafts 132, and a connecting line of the two connecting grooves can be defined upon an opening of the mounting groove 1115. The clamping shaft 14 defines the clamping groove 141 for receiving the clamping strip 133, user can push the handle part 134 to produce a pushing force, the pushing force can be transfered to a groove wall of the clamping groove 141 through the clamping strip 133, and the clamping strip 14 can be pushed to move along the guide rail 1117 and press the spring 15, so that the clamping shaft 14 can move to be escaped from the housing 30. The holding part 134 is exposed from a lateral side of a connecting space formed by the first pressing cover 111 and the second pressing cover 112, user can easily rotate the handle 13 to realize the aim of escaping the clamping shaft 14 from the housing 30, for releasing and opening the pressing cover 10, therefore the filter element can be changed easily.

Furthermore, the handle part 134 can rotate relative to the first pressing cover 111 until the handle part 134 is above the top of the second pressing cover 112. In the exemplary embodiment, the holding part 134 defined at the side of the handle body 131 can rotate around the connecting shaft 132, for forming an arc-shaped rotating path, and the holding part 134 can rotate until the holding part 134 is above the top of the second pressing cover 112. That is, a gap is formed between the second pressing cover 112 and the first pressing cover 111, as such the handle 13 can be rotated conveniently.

Referring to FIGS. 1-2, the top of the housing 30 protrudes a positioning part 32 for clamping with the clamping shaft 14, the first pressing cover 111 resists on the positioning part 32.

In an exemplary embodiment, the positioning part 32 is protruded from a side of the top of the housing 30, the first pressing cover 111 resists on the positioning part 32, such that the positioning part 32 can act a function of limiting the position of the first pressing cover 111. In addition, the clamping shaft 14 is defined a side of the first pressing cover 111 facing the positioning part 32, for clamping with the positioning part 32, the pressing cover 10 can be connected with the housing 30.

Referring to FIG. 2, the positioning part 32 defines a via hole 33, the clamping shaft 14 defines a clamping part 143 which is received in the via hole 33.

In an exemplary embodiment, a number of the via hole 33 can be three, two adjacent via holes 33 can be formed and separated through a separating strip 34. Accordingly, the clamping shaft 14 defines three clamping parts 143, a containing slot 144 is formed between two adjacent clamping parts 143, the clamping strip 133 can be received in the containing slot 144, three clamping parts 143 can be received in corresponding via holes 33. The clamping part 143 and the clamping groove 141 are defined at two opposite sides of the clamping shaft 14, respectively, when it needs to open the pressing cover 10, the handle 13 can be rotated to make the clamping shaft 14 to move towards a direction of pressing the spring 15, and the brings the clamping part 143 to move towards the spring 15, and then makes the clamping part 143 to be escaped from the via hole 33, and the pressing cover 10 can be escaped from the housing 30, therefore the pressing cover 10 opens the housing 30.

In an exemplary embodiment, the side of the pressing cover body 11 away from the positioning part 32 can be movably connected with the housing 30, for example, the side of the pressing cover body 11 away from the positioning part 32 can be rotatably connected with the housing 30, so that the pressing cover 10 can rotate relative to the housing 30. When the clamping shaft 14 defined at one side of the pressing cover body 11 is disconnected with the positioning part 32, the pressing cover 10 can be rotated to open the housing 30, and the composite filter element 20 defined inside of the housing 30 can be taken out.

Referring to FIGS. 2-3, the top of the clamping shaft 14 defines a positioning post 142, a wall of the via hole 33 defines a positioning element for clamping with the positioning post 142.

The positioning post 142 is protruded from the top of the clamping shaft 14, the positioning element can be a slot for receiving the positioning post 142, the wall of the via hole 33 can be depressed to form the slot, or, the positioning post 142 can be a lug which is protruded from the wall of the via hole 33, and an interference fit between the lug and the positioning post 142 can be realized, and the lug can limit the position of the positioning post 142, and then the clamping shaft 14 can be connected with the housing 30 to act the fixing function.

Referring to FIGS. 1-3, the housing 30 defines a fixing element 31 for fixing the connecting element 40, the fixing element 31 defines a connecting hole, the second pressing cover 112 includes a first side wall 1121 and a second side wall 1122 facing the first side wall 1121, the first side wall 1121 is connected with the first connecting arm 1111, the second side wall 1122 is connected with the third connecting arm 1113, one end of the first side wall 1121 and one end of the second side wall 1122 both define a third through hole 1123 for receiving the connecting element 40, the connecting element 40 passes through the connecting hole and the third through holes 1123 in sequence, for connecting with the fixing element 31 and the second pressing cover 112.

In an exemplary embodiment, the number of the connecting element 40 is two, one connecting element 40 is connected with the first side wall 1121, the other one is connected with the second side wall 1122, as such the second pressing cover 112 can rotate around a spindle which is a connecting line of the two connecting elements 40, as such the pressing cover 10 can rotate to open or cover the housing 30.

The fixing element 31 is protruded from the top of the housing 30, a number of the fixing element 31 can be two, each fixing element 31 corresponds to one corresponding connecting element 40. That is, the connecting element 40 can be detachably connected with the fixing element 31, such that the pressing cover 10 is also detachably connected with fixing element 31, as such it is convenient to mount and disassemble the pressing cover 10.

Furthermore, the fixing element 31 defines a connecting hole, the first side wall 1121 and the second side wall 1122 both define the third through hole 1123 for receiving the connecting element 40, the connecting element 40 passes through the connecting hole and the third through holes 1123 in sequence, to connect with the fixing element 31 and the pressing cover 10. That is, the pressing cover 10 can rotate around the connecting element 40, to open or cover the housing 30.

Referring to FIG .4, the connecting element 40 includes a first connecting segment 41 and a second connecting segment 42 connected with the first connecting segment 41, the first connecting segment 41 defines an external thread, the connecting hole defines an internal thread matching to the external thread, the aperture of the connecting hole is larger than the aperture of the third through hole 1123.

In an exemplary embodiment, the connecting element 40 is a screw post, the screw post is connected with the fixing element 31 through the first connecting segment 41, and it is convenient to mount and disassemble the screw post. The aperture of the connecting hole is larger than the aperture of the third through hole 1123, that is, the diameter of the first connecting segment 41 is larger than the diameter of the second connecting segment 42, the second connecting segment 42 can be connected with the pressing cover 10 through an interference fit mode, and the pressing cover 10 can be firmly connected with the connecting element 40.

Furthermore, the connecting element 40 further defines a limiting element 43, the limiting element 43 is defined on an end of the first connecting segment 41 opposite to the second connecting segment 42, and the orthographic projection area of the limiting element 43 projected on the fixing element 31 is larger than the area of the opening of the connecting hole.

In an exemplary embodiment, the limiting element 43 can be a screw cap defined at a side of the first connecting segment 41, the screw cap can limit the position of the screw post, and prevent the screw post from moving towards the third through hole 1123, and it is convenient to mount and disassemble the screw post. Furthermore, a contacting area between the limiting element 43 and the fixing element 31 is larger than an area of an opening of the connecting hole, the bigger the contacting area between the limiting element 43 and the fixing element 31, a resistance force for preventing the connecting element 40 from moving towards the third through hole 1123 is larger, and the pressing cover 10 can be firmly connected with the connecting element 40.

Referring to FIG .1, the present disclosure provides a water purifier. The water purifier includes a composite filter element 20 and a housing assembly. The housing assembly includes a housing 30, a pressing cover 10 for covering or opening the housing 30, and a connecting element 40 defined at the housing 10, the composite filter element 20 is received in the housing 30 and connected with the housing 30, and the top end of the composite filter element 20 passes through the pressing cover 10, one end of the pressing cover 10 is connected with the housing 30 via the connecting element 40, and the pressing cover 10 rotates relative to the housing 30 around the connecting element 40, to cover or open the housing 30.

The detail structures of the housing assembly of the water purifier can be referred to the above exemplary embodiments, as the water purifier adopts all the technical proposal of the above exemplary embodiments, the water purifier at least has all of the beneficial effects of the technical proposal of the above exemplary embodiments, no need to repeat again.

The composite filter element 20 includes a filter element body 21, the filter element body 21 is received in the housing 30 and connected with the housing 30, the filter element body 21 includes a bottle body 211, and a membrane component defined in the bottle body 311, the membrane component includes a pre-filtering filter element, a fine filtering filter element, and an activated carbon filter element which are located along a flow direction of water in sequence.

In the technical solution of the present disclosure, the filter element body 21 includes a bottle body 211 and a membrane component located in the bottle body 211, the membrane component includes the pre-filtering filter element, the fine filtering filter element and the activated carbon filter element which are located along a flow direction of water in sequence, the water can be filtered through multiple steps, and the purifying effect is improved, and the purifying function of the water purifier is ensured.

It is to be noted that, the composite filter element 20 can be referred to that a pre-filtering filter element (pre-PP cotton, granular active carbon), and a fine filtering filter element located behind the pre-filtering filter element (the fine filtering filter element can be a RO film, a nanofiltration membrane or a ultrafiltration membrane, the RO film is a reverse osmosis membrance, the aperture of the reverse osmosis membrance can be low to a nano-scale, under a certain pressure, water can pass through the RO film, such that the filtered water can be strictly separated from the concentrated water which cannot pass through the RO film), even a post-posed activated carbon filter (such as a post-posed activated carbon), are all composited into one filter element.

Referring to FIGS. 1-3, the water board 22 is defined at the top wall of the bottle body 211, and the water board 22 passes through the first through hole 1114 and the second through hole 1124 to extend out of the pressing cover body 11.

A side of the water board 22 facing the filter element body 21 defines a plurality of waterway pipe interface 23; the housing 30 has a plurality of waterway pipe connectors defined therein, each waterway pipe connector corresponds to one waterway pipe interface 23.

In the exemplary embodiment, the filter element body 21 has a cylindrical structure, the filter element body 21 is internally provided with the pre-filtering filter element, the fine filtering filter element, and the post-posed activated carbon filter, the pre-filtering filter element is composited with the fine filtering filter element and the post-posed activated carbon filter, such that the running water can be multi-purified, the purifying water quality required by user can be met. The water board 22 has a plurality of waterway pipe interfaces 23, the waterway pipe interfaces 23 are protruded from a side of the filter element body 21, each waterway pipe interface 23 can be connected with different waterways, the water can be multi-purified through one composite filter element 20.

In the exemplary embodiment, the water board 22 has a four-square column structure, and one end of the water board 22 is protruded from the filter element body 21, the protruded part is separated from the filter element body 21, the waterway pipe interfaces 23 are defined at a side of the protruded part facing the filter element body 21, that is, the bottom surface of the protruded part. Please referring to FIG. 5, the number of the waterway pipe interfaces 23 can be four, the four waterway pipe interfaces 23 can be running water interface, pure water interface, pressure tank interface, waste water interface, respectively. Please referring to FIG. 1, the external side of the housing 30 protrudes four interfaces, the four interfaces are connected with the four waterway pipe connectors in the housing 30 respectively, the waterway pipe connectors in the housing 30 can be clamped with the waterway pipe interfaces 23 of the water board 22, applying force on the handle 25 can ensure that the waterway pipe connectors are accurately connected with the waterway pipe interfaces 23, the waterway pipe connectors can be connected with the waterway pipe interfaces 23 without user's additional operation, which is convenient.

Furthermore, an outer wall of each waterway pipe interface 23 is coiled around a sealing ring 24 for sealing a connecting part of the waterway pipe interface 23 and the waterway pipe connector.

The sealing ring 24 can further ensure that the waterway pipe interface 23 can be closely connected with the waterway pipe connector, for preventing the leaking of pressure or water. The waterway pipe connector can be inserted into the sealing ring 24 through applying force on the handle 25, compared with the existed claw connecting mode, the setting of the sealing ring 24 is much more convenient.

In a preferable exemplary embodiment of the present disclosure, the number of the sealing ring 24 is two, two sealing rings 24 are arranged in parallel, two sealing rings 24 can further ensure that the waterway pipe interface 23 can be closely connected with the waterway pipe connector.

The composite filter element further includes a handle 25, the handle 25 is movably connected with a lateral wall of the bottle body 211, the housing 30 defines a receiving hole 35 for receiving the handle 25.

The receiving hole 35 is run through with the opening. The housing 30 defines the receiving hole 35 for receiving the handle 25, that is, when the filter element body 21 is received in the housing 30, the handle 25 is exposed from the receiving hole 35, such that user can grasp the handle 25 through the receiving hole 35, and which is convenient.

Preferably, the number of the handle 25 is two, two handles 25 are symmetrically arranged based on the axis of the filter element body 21. Such setting can enable user to easily take the composite filter element 20 out of the housing 30, and place the composite filter element 20 in the housing 30, and user can apply force to the filer element body 21 much better through two symmetrically arranged handles 25, and it is ensured that the filter element body 21 can be closely connected with inner structure of the housing 30.

In a preferable exemplary embodiment, the number of the handle 25 is two, two handles 25 rotate around a spindle which is a connecting line of the two handles 25.

Referring to FIGS. 1 and 5, the bottom of the filter element body 21 defines a collar bore structure 26 , the collar bore structure 26 includes at least two bores, one bore coils around another bore.

The bores can be composited through coiling the outer bore around the inner bore to form the collar bore structure 26, therefore, the number of the holes formed on the filter element body 21 can be reduced, the structural character of the filter element body 21 is rationally used. And, at least two bores can be connected with corresponding external connecting parts through one collar bore structure 26 at a time, the operation is much simpler and faster.

It should be noted that, the at least two bores includes at least one inlet bore for inletting water and at least one outlet bore for draining off water. In the exemplary embodiment, the collar bore structure 26 includes two bores, one of the two bores can be the inlet bore for inletting water, the other bore can be the outlet bore for draining off water, the outlet bore is coiled in the inlet bore. In detail, running water from the water board 22 can flow into the filter element body 21 through a running water interface, the running water is initially purified, then the initially purified running water flows out of the outlet bore, and then is secondarily purified to flow into the filter element body 21 to be deeply purified. The setting of the collar bore structure 26 adds the movement of the water and the purifying process, such that the water quality purifying effect of the composite filter element 20 is much improved.

The foregoing embodiments are merely some illustrative embodiments of the present disclosure, and are not intended to limit the patentable scope of the present disclosure,. Any equivalent structural or flow transformations based on the specification and the drawing of the present disclosure, or any direct or indirect applications of the present disclosure in other related technical fields, shall all fall within the protection scope of the present disclosure.

## Claims

1. A housing assembly, configured to receive a composite filter element (20) of a water purifier, comprising a housing (30), a pressing cover (10) for covering or opening the housing (30), and a connecting element (40) defined on the housing (30), the composite filter element (20) being received in the housing (30) and connected with the housing (30), and the top end of the composite filter element (20) passing through the pressing cover (10), one end of the pressing cover (10) being connected with the housing (30) via the connecting element (40), and the pressing cover (10) rotating relative to the housing (30) around the connecting element (40) to cover or open the housing (30).

2. The housing assembly according to claim 1, wherein the pressing cover (10) comprises a pressing cover body (11), the pressing cover body (11) comprises a first pressing cover (111) and a second pressing cover (112), the first pressing cover (111) is connected on the top of the housing (30), the second pressing cover (112) is connected with a side of the first pressing cover (111) opposite to the housing (30), the first pressing cover (111) defines a first through hole (1114), the second pressing cover (112) defines a second through hole (1124) communicated with the first through hole (1114), the top end of the composite filter element (20) passes through the first through hole (1114) and the second through hole (1124).

3. The housing assembly according to claim 2, wherein the first pressing cover (111) comprises a first connecting arm (1111), a second connecting arm (1112), and a third connecting arm (1113), the first connecting arm (1111), the second connecting arm (1112), and the third connecting arm (1113) are connected with each other in sequence to form the first through hole (1114), and/or, the top of the housing (30) defines an opening for taking out of the filter element from the housing (30) or placing the filter element into the housing (30), the first pressing cover (111) and the second pressing cover (112) are both rotatably connected with a part of the housing (30) adjacent to the opening, the first through hole (1114) and the second through hole (1124) are both communicated with the opening, the top end of the composite filter element (20) passes through the opening, the first through hole (1114), and the second through hole (1124).

4. The housing assembly according to claim 2, wherein the pressing cover (10) comprises a spring (15), a clamping shaft (14), and a handle (13), the spring (15), the clamping shaft (14), and the handle (13) are all defined on the side of the first pressing cover (111) opposite to the housing (30), one end of the spring (15) is connected with the first pressing cover (111), the other end of the spring (15) is connected with the clamping shaft (14), a side of the clamping shaft (14) opposite to the spring (15) is connected with the handle (13), the handle (13) is enable to rotate relative to the pressing cover body (11), to push the clamping shaft (14) to press the spring (15) and make the clamping shaft (14) escape from the housing (30), for the pressing cover (10) to open the housing (30).

5. The housing assembly according to claim 4, wherein the first pressing cover (111) defines a mounting groove (1115) and a receiving groove (1116), the receiving groove (1116) is run through with the mounting groove (1115), the mounting groove (1115) is for receiving the clamping shaft (14), the receiving groove (1116) is for receiving the spring (15).

6. The housing assembly according to claim 5, wherein the bottom of the mounting groove (1115) defines a guide rail (1117), the clamping shaft (14) defines a guide groove corresponded to the guide rail (1117); or,
the bottom of the mounting groove (1115) defines a guide groove, the clamping shaft (14) defines a guide rail (1117) corresponded to the guide groove.

7. The housing assembly according to claim 6, wherein the handle (13) comprises a handle body (131), a connecting shaft (132), a clamping strip (133), and a holding part (134), the connecting shaft (132) is defined on two opposite sides of the handle body (131) and connected with the first pressing cover (111), the handle body (131) is enable to rotate around the connecting shaft (132), the clamping strip (133) is defined on a side of the handle body (131) facing the clamping shaft (14), and the clamping strip (133) extends towards the housing (30), the holding part (134) is located at a side of the handle body (131) opposite to the clamping shaft (14); one end of the clamping shaft (14) back to the guide groove defines a clamping groove (141) for receiving the clamping strip (133).

8. The housing assembly according to claim 4, wherein the top of the housing (30) protrudes a positioning part (32) for clamping with the clamping shaft (14), the first pressing cover (111) resists on the positioning part (32).

9. The housing assembly according to claim 8, wherein the positioning part (32) defines a via hole (33), the clamping shaft (14) defines a clamping part (143) which is received in the via hole (33).

10. The housing assembly according to claim 9, wherein the top of the clamping shaft (14) defines a positioning post (142), a wall of the via hole (33) defines a positioning element for clamping with the positioning post (142).

11. The housing assembly according to claim 2, wherein the housing (30) defines a fixing element (31) for fixing the connecting element (40), the fixing element (31) defines a connecting hole, the second pressing cover (112) comprises a first side wall (1121) and a second side wall (1122) facing the first side wall (1121), the first side wall (1121) is connected with the first connecting arm (1111), the second side wall (1122) is connected with the third connecting arm (1113), one end of the first side wall (1121) and one end of the second side wall (1122) both define a third through hole (1123) for receiving the connecting element (40), the connecting element (40) passes through the connecting hole and the third through holes (1123) in sequence, to connect with the fixing element (31) and the second pressing cover (112).

12. The housing assembly according to claim 11, wherein the connecting element (40) comprises a first connecting segment (41) and a second connecting segment (42) connected with the first connecting segment (41), the first connecting segment (41) defines an external thread, the connecting hole defines an internal thread matching to the external thread, the aperture of the connecting hole is larger than the aperture of the third through hole (1123).

13. The housing assembly according to claim 12, wherein the connecting element (40) further defines a limiting element (43), the limiting element (43) is defined on an end of the first connecting segment (41) opposite to the second connecting segment (42), and the orthographic projection area of the limiting element (43) projected on the fixing element (31) is larger than the area of the opening of the connecting hole.

14. A water purifier, comprising a composite filter element (20) and a housing assembly as claimed in any one of claims 1-13.

15. The water purifier according to claim 14, wherein the composite filter element (20) comprises a filter element body (21), the filter element body (21) is received in the housing (30) and connected with the housing (30), the filter element body (21) comprises a bottle body (211), and a membrane component located in the bottle body (211), the membrane component comprises a pre-filtering filter element, a fine filtering filter element, and an activated carbon filter element which are located along a flow direction of water in sequence.
